# EUROPÄISCHE PATENTSCHRIFT

(11) **EP 2 887 114 B1**
(45) Veröffentlichungstag und Bekanntmachung des Hinweises auf die Patenterteilung: **13.07.2016**
(21) Anmeldenummer: 13199501.1
(22) Anmeldetag: 23.12.2013
(51) Int. Cl.: G02B 19/00, F21V 5/04

(54) **Vorsatzoptik, Lichtmodul und Beleuchtungsvorrichtung**
Adaptor lens, light module and lighting device
Optique rapportée, module lumineux et dispositif d'éclairage

(43) Veröffentlichungstag der Anmeldung: 24.06.2015
(73) Patentinhaber: Hella KGaA Hueck & Co, 59552 Lippstadt (DE)
(72) Erfinder: Möller, Dennis, 59557 Lippstadt (DE)

(56) Entgegenhaltungen:
- WO-A1-2012/070980
- US-A1- 2009 129 097
- US-A1- 2013 194 811

## Beschreibung

Die Erfindung betrifft ein Lichtmodul mit einer Vorsatzoptik für Lichtquellen und sowie eine Beleuchtungsvorrichtung mit der Vorsatzoptik. Die Beleuchtungsvorrichtung wird insbesondere zur Hinterleuchtung einer Projektionsfläche beispielsweise von großflächigen Werbetafeln, Hinweisschildern oder dergleichen verwendet.

Beleuchtungsvorrichtungen zur Hinterleuchtung von Werbetafeln, Hinweisschildern oder der Attika von Tankstellendächern weisen eine vergleichsweise große Fläche von insbesondere mehr als 0,3 m² auf. Klassisch werden in den Beleuchtungsvorrichtungen konventionelle Lichtquellen wie Glüh-, Halogen- oder Quecksilberdampflampen eingesetzt, welche insbesondere eine unbefriedigende Energieeffizienz aufweisen und für die üblichen Anwendungsszenarien unzureichende Lebensdauern bereitstellen. Ferner ist bekannt, Leuchtstoffröhren als Lichtquellen zu verwenden. Diese sind zwar vergleichsweise groß ausgeführt und geeignet, eine große Fläche zu hinterleuchten. Jedoch sind die Systeme sehr schlecht skalierbar. Zudem ist die Lichtverteilung wenig präzise beziehungsweise homogen.

Weiterhin kommen in jüngerer Zeit Leuchtdioden als Lichtquellen für die Hinterleuchtung großer Flächen zur Anwendung. Hierbei wird typischerweise eine sehr große Anzahl von Leuchtdioden mit geringer Lichtleistung verwendet. Diese Leuchtdioden werden dann üblicherweise gleichmäßig hinter der zu hinterleuchtenden Fläche verteilt. Gegebenenfalls sind die Leuchtdioden mit einer Vorsatzoptik versehen, um den Abstrahlwinkel zu vergrößern und die Anzahl der Leuchtdioden insgesamt zu reduzieren. Jedoch bedarf dieses Konzept einer großen Platinen- beziehungsweise Schaltungsträgerfläche für die Leuchtdiodenmontage. Die Platinen- beziehungsweise Schaltungsträgerfläche ist quasi genauso groß wie die zu hinterleuchtende Fläche. Insofern ergeben sich hohe Material- und Montagekosten.

Bei der Verwendung von Leuchtdioden ist weiter bekannt, diese der zu hinterleuchtenden Fläche randseitig zuzuordnen. Eine Hauptabstrahlrichtung der Leuchtdioden erstreckt sich hierbei üblicherweise parallel zu einer Erstreckungsebene der zu hinterleuchtenden Fläche. Das Licht der Leuchtdioden wird typischerweise stirnseitig in einen Lichtleiter eingekoppelt und an einer Auskoppelfläche des Lichtleiters in Richtung der zu hinterleuchtenden Fläche umgelenkt. Insbesondere aufgrund der vorzusehenden Lichtleiter ist die Fläche, welche homogen ausgeleuchtet werden kann, bei derartigen Beleuchtungsvorrichtungen jedoch begrenzt. Eine flexible Skalierbarkeit dieser Lösung für beliebig große Hinterleuchtungsflächen besteht typischerweise nicht.

Aus der US 2013/0194811 A1 ist ein Lichtmodul mit einer Vorsatzoptik für Leuchtdioden bekannt. Die Vorsatzoptik weist eine facettierte Lichteintrittsfläche und eine facettierte Lichtaustrittsfläche auf. Die Teilflächen der Lichteintrittsfläche und der Lichtaustrittsfläche sind regelmäßig gebildet und sphärisch gekrümmt. Im Bereich eines optischen Zentrums der einer Mehrzahl von Leuchtdioden angeordnet. Dabei wird von den Leuchtdioden abgestrahltes Licht an den konvex gekrümmten sphärischen Teilflächen der Lichteintrittsfläche gebündelt wird und über die ebenfalls konvex gekrümmte Lichtaustrittsfläche austritt. Es gelingt hierdurch, eine gleichmäßige Verteilung des von den drei Lichtquellen imitierten Lichts zu erreichen und eine Farbverschiebung zu vermeiden.

Weitere Vorsatzoptiken für Lichtmodule sind aus der WO 2012/07098 A1 und US 2009/0129097 A1 bekannt. Jeweils wird durch die individuelle Formgebung der Vorsatzoptik die Lichtcharakteristik des Lichtmoduls entsprechend der individuellen Vorgaben der einzelnen Applikation angepasst. An den Lichteintrittsflächen und den Lichtaustrittsflächen der Vorsatzoptiken sind optische Strukturelemente, beispielsweise Prismenstrukturen vorgesehen.

Aufgabe der vorliegenden Erfindung ist es, eine hinsichtlich ihrer Größe frei skalierbare Hinterleuchtung von Anzeigeflächen einer Werbetafel, eines Hinweisschilds oder dergleichen auf Basis von Leuchtdioden kostengünstig zu realisieren und dabei eine hohe Homogenität und Güte der Lichtverteilung bereitzustellen. Insbesondere gilt es, ein Lichtmodul mit einer Vorsatzoptik und eine Beleuchtungsvorrichtung für derartige Hinterleuchtungszwecke anzugeben.

Zur Lösung der vorstehenden Aufgabe weist die Erfindung die Merkmale der Patentansprüche 1 und 8 auf.

Durch das Vorsehen der erfindungsgemäß facettiert ausgebildeten Lichteintrittsfläche und der ebenfalls facettiert ausgebildeten Lichtaustrittsfläche wird eine Vorsatzoptik bereitgestellt, welche für einen außenstehenden Betrachter den Eindruck erweckt, er schaue auf eine Vielzahl von unregelmäßig angeordneten Lichtquellen. Der Betrachter nimmt nicht etwa die eine real ausgeführte Lichtquelle isoliert war. Es entsteht für ihn der Eindruck, dass das Licht von einer Vielzahl von Lichtquellen homogen ausgestrahlt wird. Da die von dem außenstehenden Betrachter wahrgenommenen Lichtquellen nicht real ausgeführt sind, sondern als Resultat der facettierten Lichteintrittsfläche und der facettierten Lichtaustrittsfläche erscheinen, wird für diese nicht realen Lichtquellen nachfolgend der Begriff der virtuellen Lichtquellen verwendet. Durch die Vielzahl der unregelmäßig und verteilt angeordneten virtuellen Lichtquellen stellt die Vorsatzoptik eine Lichtverteilung großer Homogenität bereit. Die real ausgeführte Lichtquelle wird durch die Vorsatzoptik nicht oder kaum als heller Punkt erkannt.

Die Vorsatzoptik umfasst einen die geometrische Form der Vorsatzoptik bestimmenden, insbesondere schalenartig geformten Optikkörper und ein außerhalb des Optikkörpers gebildetes optisches Zentrum, das für die Aufnahme der Lichtquelle vorgesehen ist. Eine der Lichtquelle zugewandte Innenseite des schalenartig geformten Optikkörpers definiert eine Ausnehmung der Vorsatzoptik, in die die Lichtquelle jedenfalls abschnittsweise eingesetzt werden kann. Des Weiteren trägt die Innenseite des Optikkörpers die Lichteintrittsfläche. Die Lichtaustrittsfläche ist an einer der Lichtquelle abgewandten Außenseite des schalenartigen Optikkörpers gebildet. Vorteilhaft kann durch das Vorsehen der schalenartigen Vorsatzoptik das von der Lichtquelle abgestrahlte Licht sehr effektiv entsprechend der geforderten Lichtverteilung umgelenkt werden. Die Lichtquelle ist der Innenseite der Vorsatzoptik dabei so zugeordnet, dass das von der Lichtquelle in einen Halbraum abgestrahlte Licht nahezu vollständig auf die Lichteintrittsfläche trifft.

Die facettierte Lichteintrittsfläche sowie die facettierte Lichtaustrittsfläche weisen eine Vielzahl kleiner Teilflächen auf, welche insbesondere nach Art von Freiformflächen mit variablen Radien ausgeführt sind. Insbesondere sind die Freiformflächen jeweils für stetig gebildet. Das Vorsehen der Freiformflächen erlaubt es, die Lichtverteilung maximal variabel zu gestalten und an die individuellen Bedürfnisse anzupassen. Die Teilflächen können beispielsweise kissenartig ausgebildet sein. Je nach individueller Gestaltung können die Teilflächen an der Lichteintrittsfläche konkav, das heißt nach innen gewölbt, oder konvex, das heißt nach außen gewölbt ausgeführt sein. Das Licht wird dann entweder gestreut oder gebündelt auf die Lichtaustrittsfläche auftreffen. Die Lichtaustrittsfläche ist vorzugsweise konkav, das heißt nach innen gekrümmt ausgebildet. Beim Austreten aus dem Optikkörper wird das Licht demzufolge gestreut.

Eine Vielzahl der virtuellen Lichtquellen liegt zwischen der Lichtaustrittsfläche und der Lichteintrittsfläche, das heißt im Inneren des Optikkörpers. Je nach Gestaltung der Lichteintrittsfläche und der Lichtaustrittsfläche und insbesondere je nach Wölbung der Teilflächen können weitere virtuelle Lichtquellen auch außerhalb der Vorsatzoptik, insbesondere auf einer der Lichtaustrittsfläche zugewandten Seite außerhalb des Optikkörpers beziehungsweise im Bereich der Ausnehmung der Vorsatzoptik gebildet sein.

Bei Verwendung der Vorsatzoptik für eine erfindungsgemäßes Lichtmodul wird eine reale Lichtquelle in dem optischen Zentrum der Vorsatzoptik so angeordnet, dass das Licht der realen Lichtquelle weitgehend vollständig über die Lichteintrittsfläche in den Optikkörper eingekoppelt wird und über die Lichtaustrittsfläche austritt. Die Facettierung der Lichteintrittsfläche und der Lichtaustrittsfläche ist dabei insbesondere so gestaltet, dass eine Lichtverteilung im Bereich von +/- 65° oder mehr in Bezug zu eine Lotrichtung der Lichtquelle bereitgestellt wird. Als Lichtquelle werden insbesondere Leuchtdioden, bevorzugt High-Power-Leuchtdioden mit 1 bis 3 W und 100 bis 300 lm verwendet.

Das erfmdungsgemäße Lichtmodul ist insbesondere als Teil einer Beleuchtungsvorrichtung beabstandet zu einer Hinterleuchtungsfläche der Beleuchtungsvorrichtung so vorgesehen, dass die durch die Lichtquelle definierte Lotrichtung senkrecht zu einer Erstreckungsebene der Hinterleuchtungsfläche vorgesehen ist. Die Hinterleuchtungsfläche ist beabstandet von dem Optikkörper auf einer der Lichtaustrittsfläche zugeordneten beziehungsweise der Lichtquelle abgewandten Seite angeordnet. Die von dem Lichtmodul bereitgestellte Lichtverteilung ist so ausgebildet, dass die Hinterleuchtungsfläche im Wesentlichen homogen ausgeleuchtet ist. Die Lotrichtung der Lichtquelle definiert hierbei eine Hauptabstrahlrichtung der Beleuchtungsvorrichtung.

Die Vorsatzoptik kann in Bezug auf zwei Achsen symmetrisch ausgebildet sein. Eine erste Symmetrieachse und eine zweite Symmetrieachse sind beispielsweise um 45° winkelversetzt zueinander orientiert. Die Symmetrieachsen erstrecken sich wie die Erstreckungsebene der Hinterleuchtungsfläche senkrecht zu der Lotrichtung der Lichtquelle. Ein Schnittpunkt der beiden Symmetrieachsen liegt vorzugsweise in der Lotrichtung der Lichtquelle. Beispielsweise kann die Vorsatzoptik symmetrisch in Bezug auf die Lotrichtung der Lichtquelle ausgeführt werden.

Die Facettierung der Lichteintrittsfläche und der Lichtaustrittsfläche sowie die geeignete Gestaltung der Teilflächen derselben als Freiformflächen, insbesondere als konkav gekrümmte Freiformflächen, erlaubt es, mit sehr wenigen Lichtmodulen eine sehr große Hinterleuchtungsfläche homogen auszuleuchten. Insbesondere kann die Vorsatzoptik groß im Verhältnis zur Lichtquelle ausgeführt werden. Beispielsweise ist ein Größenverhältnis zwischen einer Breite der Vorsatzoptik und einer Breite der Lichtquelle im Bereich von 10:1 bis 30:1 gebildet. Hierdurch gelingt es, beim einem in die Lotrichtung der Lichtquelle bestimmten Abstand der Lichtquelle zur Hinterleuchtungsfläche von etwa 100 mm einen seitlichen Abstand benachbarter Lichtquellen von 400 mm zu realisieren. Es kann daher eine sehr große, homogen hinterleuchtete Fläche mit sehr wenigen Lichtquellen realisiert werden.

Aus den weiteren Unteransprüchen und der nachfolgenden Beschreibung sind weitere Vorteile, Merkmale und Einzelheiten der Erfindung zu entnehmen. Dort erwähnte Merkmale können jeweils einzeln für sich oder auch in beliebiger Kombination erfindungswesentlich sein. Erfindungsgemäß beschriebene Merkmale und Details der Vorsatzoptik gelten selbstverständlich auch im Zusammenhang der erfindungsgemäßen Beleuchtungsvorrichtung und umgekehrt. So kann auf die Offenbarung zu den einzelnen Erfindungsaspekten stets wechselseitig Bezug genommen werden. Die Zeichnungen dienen lediglich beispielhaft der Klarstellung der Erfindung und haben keinen einschränkenden Charakter.

Anhand der beigefügten Zeichnungen wird die Erfindung nachfolgend näher erläutert. Dabei zeigt:
- Fig. 1: eine Prinzipdarstellung einer erfindungsgemäßen Beleuchtungsvorrichtung mit einer Mehrzahl von beabstandet zueinander angeordneten Lichtmodulen in einer Seitenansicht,
- Fig. 2: eine Draufsicht auf die Beleuchtungsvorrichtung nach Fig. 1,
- Fig. 3: eine perspektivische Ansicht einer facettierten Lichtaustrittsfläche einer Vorsatzoptik der Lichtmodule nach Figur 1 mit einer Vielzahl von optisch wirksamen Teilflächen,
- Fig. 4: eine perspektivische Ansicht einer facettierten Lichteintrittsfläche der Vorsatzoptik mit einer Vielzahl von optisch wirksamen Teilflächen,
- Fig. 5: eine Aufsicht auf die facettierten Lichtaustrittsfläche der Vorsatzoptik nach Fig. 3,
- Fig. 6: eine Aufsicht auf die facettierten Lichteintrittsfläche der Vorsatzoptik nach Fig. 4,
- Fig. 7: eine geometrische Skizze der Lichteintrittsfläche der Vorsatzoptik nach Fig. 6 mit zwei Symmetrieachsen der Vorsatzoptik,
- Fig. 8: eine Grobgeometrie der Vorsatzoptik ohne Facettierung der Lichteintrittsfläche und der Lichtaustrittsfläche in einer Schnittdarstellung nach einem Schnitt B-B gemäß Fig. 7,
- Fig. 9: eine Grobgeometrie der Vorsatzoptik ohne Facettierung der Lichteintrittsfläche und der Lichtaustrittsfläche in einer Schnittdarstellung nach einem Schnitt C-C gemäß Fig. 7,
- Fig. 10: einen Strahlengang für drei ausgewählte Lichtbündel, welche in drei unterschiedliche Richtungen von der Lichtquelle abgestrahlt werden und an der facettierten Lichteintrittsfläche und der facettierten Lichtaustrittsfläche der Vorsatzoptik umgelenkt werden,
- Fig. 11: eine Detailvergrößerung des Ausschnitts A nach Figur 10,
- Fig. 12: eine Polardarstellung der Lichtstärkeverteilungskurve einer erfindungsgemäßen Vorsatzoptik und
- Fig. 13: die Lichtstärkeverteilungskurve nach Fig. 12 in einer linearen Darstellung.

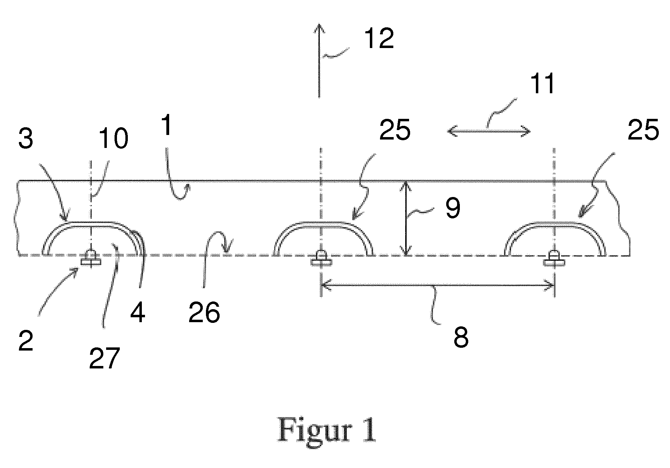

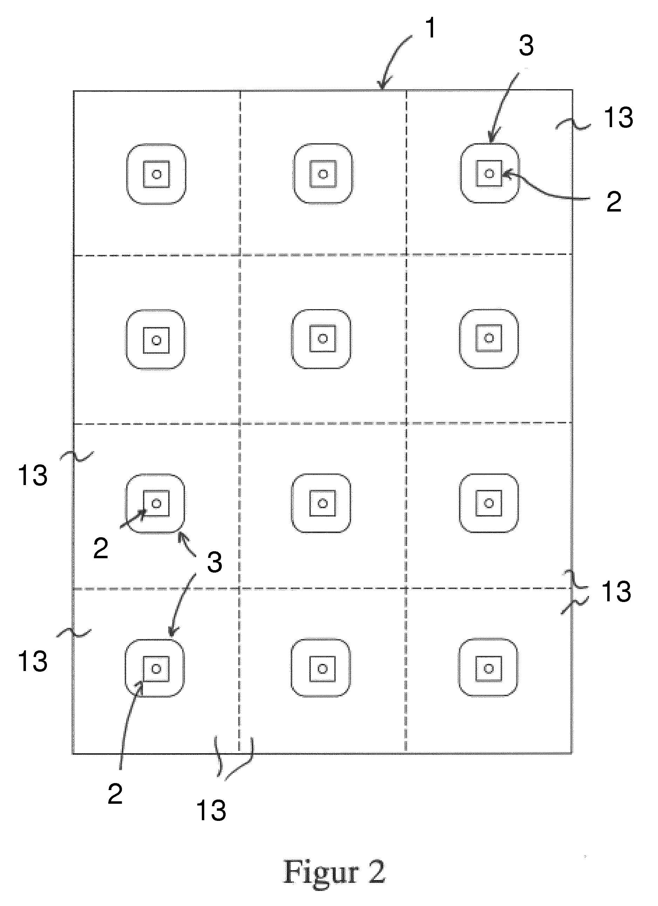

Eine erfindungsgemäße Beleuchtungsvorrichtung nach den Figuren 1 und 2 umfasst eine zu hinterleuchtende Fläche (Hinterleuchtungsfläche 1) und eine Mehrzahl von beanstandet zu der Hinterleuchtungsfläche 1 angeordneten Lichtquellen 2. Die Hinterleuchtungsfläche 1 ist beispielsweise an einer Abschlussscheibe einer Werbe- beziehungsweise Informationstafel gebildet und vorzugsweise eben erstreckt. Die Lichtquellen 2 sind insbesondere nach Art von Leuchtdioden 2 ausgeführt. Jeder einzelnen Leuchtdiode 2 ist auf einer der Hinterleuchtungsfläche 1 zugewandten Seite eine erfindungsgemäße Vorsatzoptik 3 zugeordnet. Die Vorsatzoptik 3 und der Leuchtdiode 2 sind gemeinsam Teil eines erfindungsgemäßen Lichtmoduls 25. Die Leuchtdiode 2 ist in einer Fokusposition des Vorsatzoptik 3 angeordnet.

Die Lichtquellen 2 weisen eine in eine Hauptabstrahlrichtung 12 der Beleuchtungsvorrichtung orientierte Lotrichtung 10 auf. Insofern beleuchtet die Leuchtdiode 2 die Hinterleuchungsfläche 2 direkt. Die Lotrichtung 10 ist senkrecht orientiert zu einer Erstreckungsebene 11 der Hinterleuchtungsfläche 1. Insbesondere weist die Hinterleuchtungsfläche eine Größe von mehr als 0,3 m² auf. Die Lichtquellen 2 sind insbesondere beabstandet zueinander und beabstandet zu der Hinterleuchtungsfläche 1 vorgesehen. Ein seitlicher Abstand 8 benachbarter Lichtquellen 2 ist etwa zwei bis fünf Mal so groß wie ein zwischen der Lichtquelle 2 und der hinterleuchteten Fläche 1 gebildeter Abstand 9.

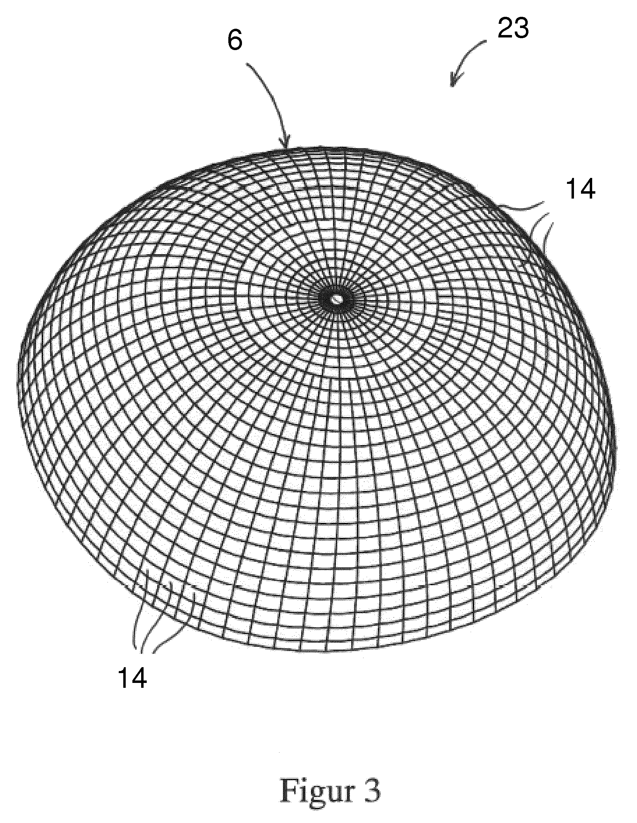

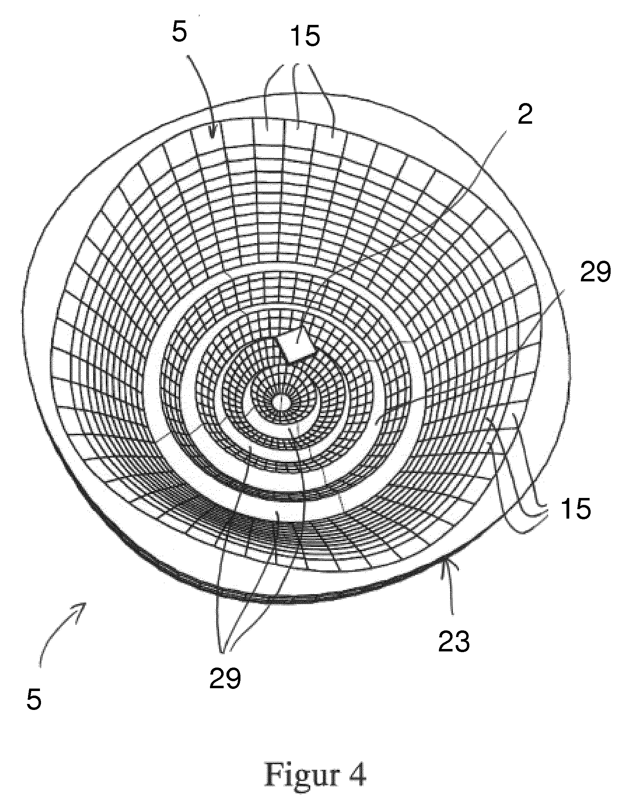

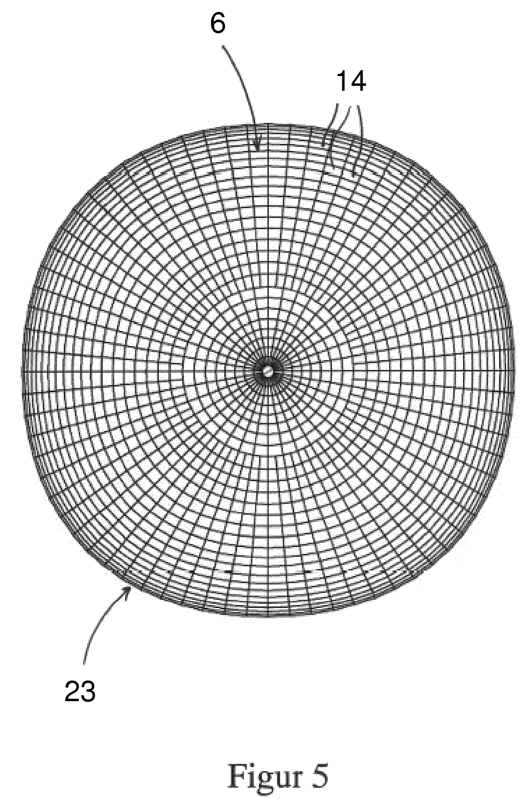

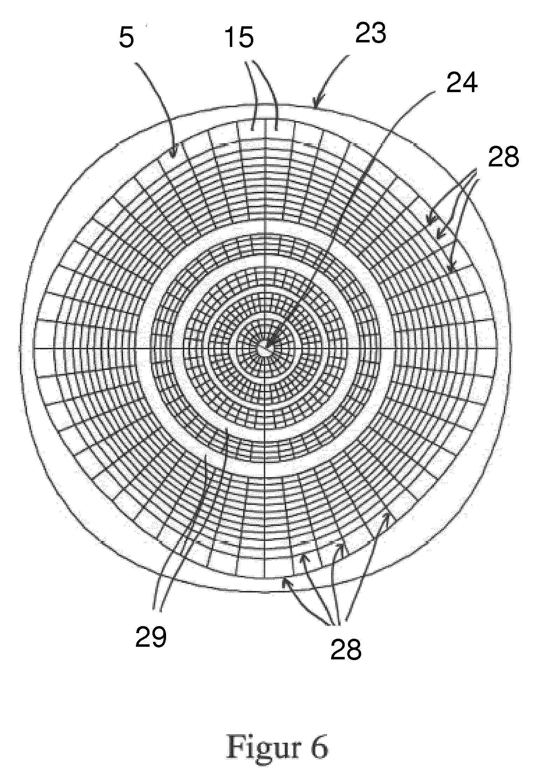

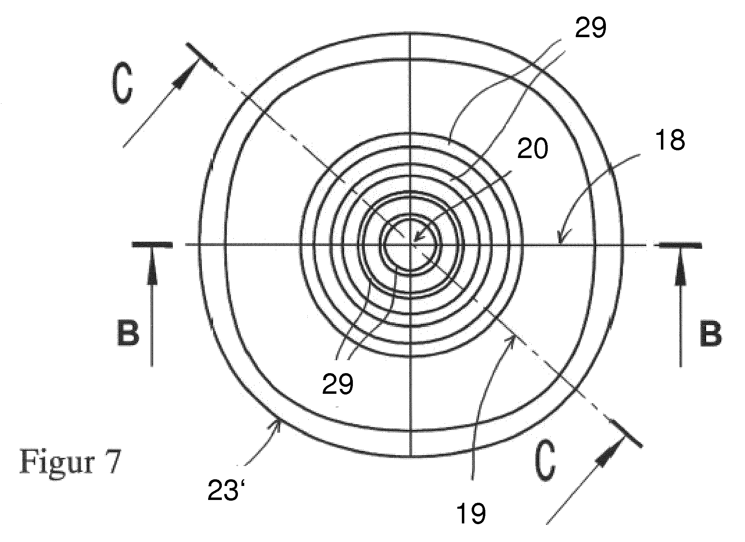

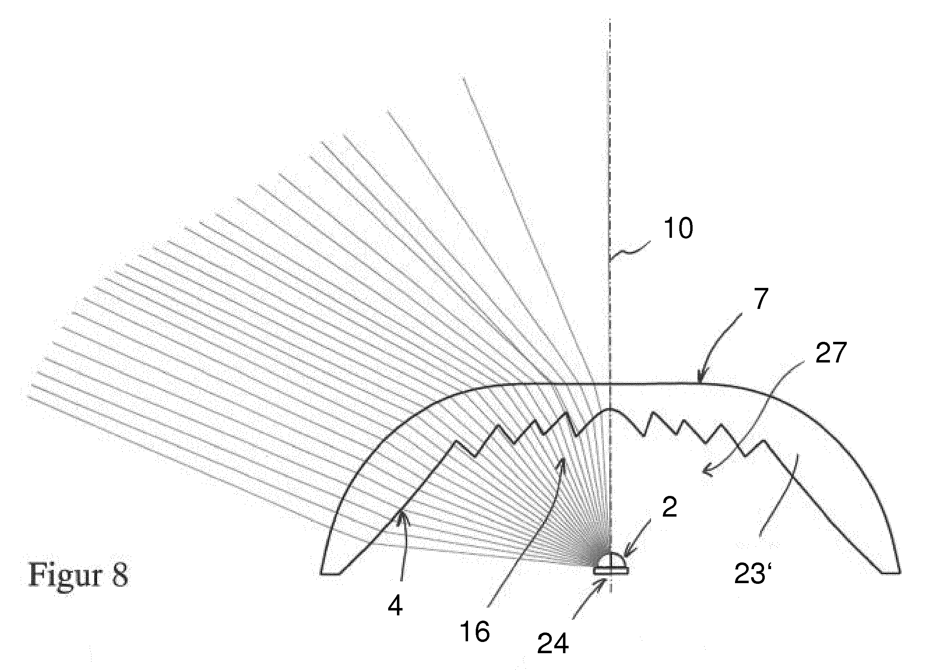

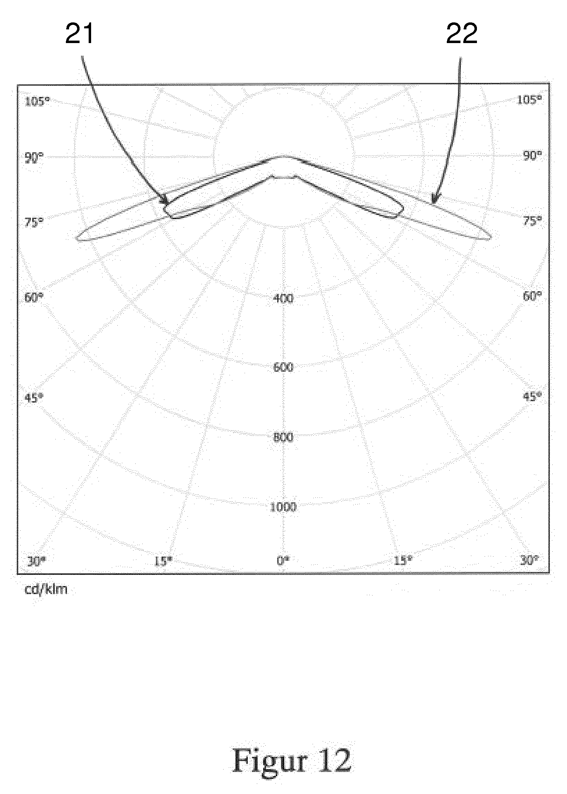

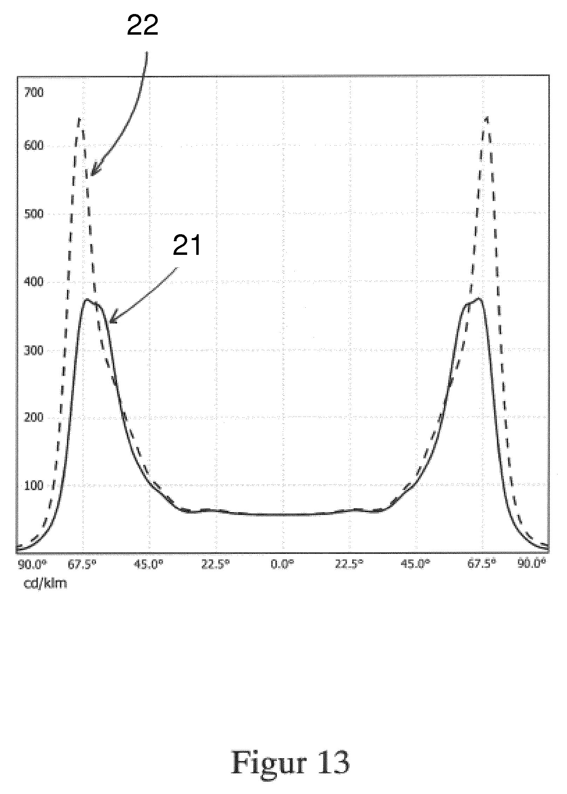

Ein Ausführungsbeispiel einer erfindungsgemäßen Vorsatzoptik 3 ist in den Figuren 3 bis 7 gezeigt. Die Vorsatzoptik 3 ist so geformt, dass von den Lichtquellen 2 abgestrahltes Licht eine im Wesentlichen quadratische Teilfläche 13 der Hinterleuchtungsfläche 1 homogen ausleuchtet. Die Figuren 8 bis 11 zeigen für die Vorsatzoptik 3 exemplarische Strahlengänge. Eine Lichtstärkeverteilungskurve 21, 22 in Polarkoordinatendarstellung und in linearer Darstellung für die Vorsatzoptik 3 ist in den Figuren 12 und 13 gezeigt.

Die Vorsatzoptik 3 weist einen insbesondere schalenartig geformten Optikkörper 23 und ein zur Aufnahme der Leuchtdiode 2 ausgebildetes optisches Zentrum 24 auf. Das optischer Zentrum 24 definiert die Fokusposition der Vorsatzoptik 3. Optikkörper 23 ist nach Art eines Linsenkörpers ausgebildet. Eine Innenseite 4 des Optikkörpers 23 definiert eine Ausnehmung 27 der Vorsatzoptik 3. An der Innenseite 4 ist eine Lichteintrittsfläche 5 der Vorsatzoptik 3 vorgesehen. Eine Lichtaustrittsfläche 6 der Vorsatzoptik 3 ist durch eine der Hinterleuchtungsfläche 1 zugewandte Außenseite 7 des schalenartig geformten Optikkörpers 23 definiert.

An der Lichtaustrittsfläche 6 der erfindungsgemäßen Vorsatzoptik 3 ist eine Vielzahl von Teilflächen 14 gebildet. Die Teilflächen 14 der facettierten Lichtaustrittsfläche 6 sind nach Art von Freiformflächen gebildet und konkav, das heißt nach innen gewölbt ausgeführt. Insbesondere haben die Teilflächen 14 der facettierten Lichtaustrittsfläche 6 eine kissenartige Struktur. Sie sind insbesondere durch vier Grenzkurven 28 definiert. Durch die konkave Krümmung der Teilflächen 14 wird über die Lichtaustrittsfläche 6 des Optikkörpers 23 ausgekoppeltes Licht gestreut.

Die facettierte Lichteintrittsfläche 5 weist ebenfalls eine Mehrzahl von Teilflächen 15 auf. Auch die Teilflächen 15 der Lichteintrittsfläche 5 sind als Freiformflächen realisiert. Wie die Teilflächen 14 der Lichtaustrittsfläche 6 weisen die Teilflächen 15 der Lichteintrittsfläche 5 eine kissenartige Struktur auf. Im dargestellten Ausführungsbeispiel sind die Teilflächen 15 der Lichteintrittsfläche 5 konkav, das heißt nach innen gekrümmt ausgebildet.

Nach einer alternativen, nicht dargestellten Ausführungsform der Erfindung können die Teilflächen 15 der Lichteintrittsfläche 5 konvex, das heißt nach außen beziehungsweise in Richtung der Leuchtdiode 2 gewölbt ausgeführt sein. Des Weiteren kann vorgesehen sein, dass einzelne Teilflächen 15 der Lichteintrittsfläche 5 konkav und andere Teilflächen 15 der Lichteintrittsfläche 5 konvex gekrümmt ausgeführt sind.

Gleiche Bauteile und Bauteilfunktionen sind durch gleiche Bezugszeichen gekennzeichnet.

In einem zu der Lotrichtung 10 benachbarten mittleren Bereich 16 der Lichteintrittsfläche 5 ist der Optikkörper 23 ringförmig gestuft ausgebildet. Die Vorsatzoptik 3 erhält durch die Ringstufen 29 eine fresnellinsenartige Form. Durch das Vorsehen der Stufung in dem mittleren Bereich 16 kann die Vorsatzoptik 3 sehr dünn ausgebildet werden. Hierdurch reduziert sich der Materialbedarf und die Herstellkosten sinken.

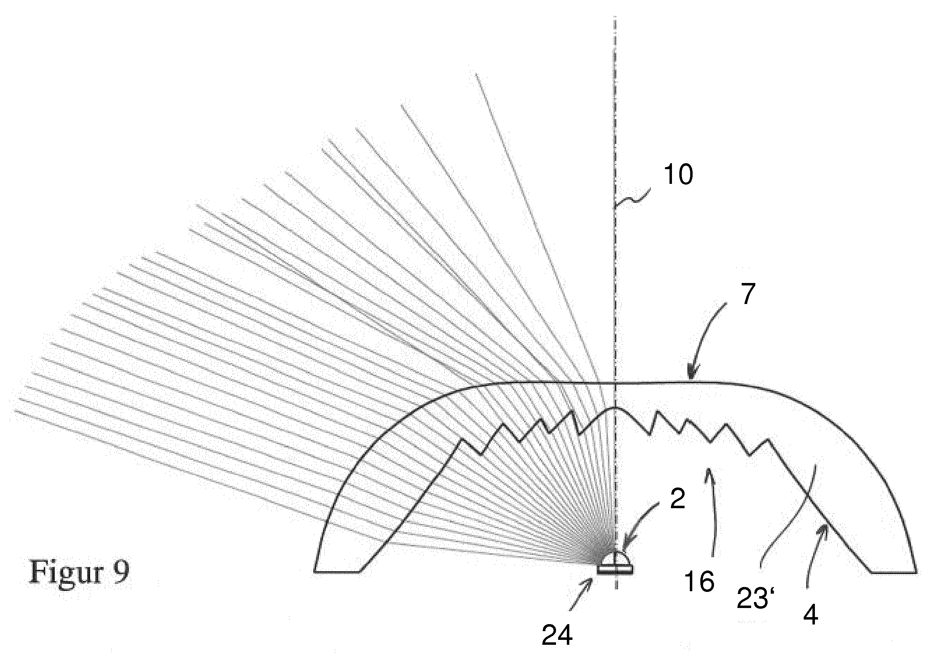

Die Figuren 8 und 9 zeigen einen Basislinsenkörper 23', der wie gleiche geometrische Grundform aufweist wie der Optikkörper 23, jedoch auf die Facettierung an der Lichteintrittsfläche 5 und der Lichtaustrittsfläche 6 verzichtet. Durch die geometrisch Grundstruktur des Basislinsenkörpers 23' wird das Licht der Leuchtdiode 2 bevorzugt aus dem Zentrum in die Außenwinkelbereiche zwischen 60° und 80° bezogen auf die Lotrichtung 10 umgelenkt. Somit können auch große Hinterleuchtungsflächen 1 mit geringem Abstand homogen ausgeleuchtet werden.

In Bezug auf die Ausleuchtung der im Wesentlichen quadratischen Teilflächen 13 sieht der Basislinsenkörper 23' statt eines rotationssymmetrischen Aufbaus einen auf zwei Achsen bezogenen symmetrischen Aufbau vor. Hierdurch gelingt es, eine im Wesentlichen quadratische Lichtverteilung bereitzustellen beziehungsweise den Teilbereich 13 der Hinterleuchtungsfläche 1 im Wesentlichen homogen auszuleuchten. Insbesondere ist der Basislinsenkörper 23' symmetrisch in Bezug auf eine zur Lotrichtung 10 senkrechte erste Symmetrieachse 18 und auf eine um 45° versetzt hierzu angeordnete, ebenfalls zu der Lotrichtung 10 symmetrische zweite Symmetrieachse 19. Die erste Symmetrieachse 18 und die zweite Symmetrieachse 19 schneiden sich in der Lotrichtung 10 der Leuchtdiode 2. In Bezug auf einen Schnittpunkt 20 der ersten Symmetrieachse 18 und der zweiten Symmetrieachse 19 ist die Vorsatzoptik 3 überdies punktsymmetrisch ausgebildet. Die erste Symmetrieachse 18 und die zweite Symmetrieachse 19 finden sich ebenfalls bei einer Drehung um 90°. Die erste Symmetrieachse 18 definiert insofern eine Längs- beziehungsweise Querebene des Optikkörpers 23 beziehungsweise des Basislinsenkörpers 23', während die zweite Symmetrieachse 19 die Diagonalebenen des Optikkörpers 23 beziehungsweise des Basislinsenkörpers 23' definiert.

Grundsätzlich wird die quadratische Teilfläche 13 der Hinterleuchtungsfläche 1 auch in den Ecken weitgehend homogen ausgeleuchtet, indem ein Abstrahlwinkel des Lichts bezogen auf die zweite Symmetrieachse 19 um zirka 2° größer ist als der Abstrahlwinkel des Lichts bezogen auf die erste Symmetrieachse 18. Es ergibt sich bereits durch die Basisgeometrie eine extrem breite Abstrahlcharakteristik und eine Halbwertsbreite (FWHM: Full Width Half Maximum) von etwa 140° beziehungsweise +/- 70° bezogen zur Lotrichtung 10. Insbesondere gelingt es durch den zweiachsensymmetrischen Aufbau des Basislinsenkörper 23, die rotationssymmetrische Lichtverteilung der Leuchtdiode 2 an die rechteckige beziehungsweise quadratische Grundform der Teilfläche 13 der Hinterleuchtungsfläche 1 anzupassen.

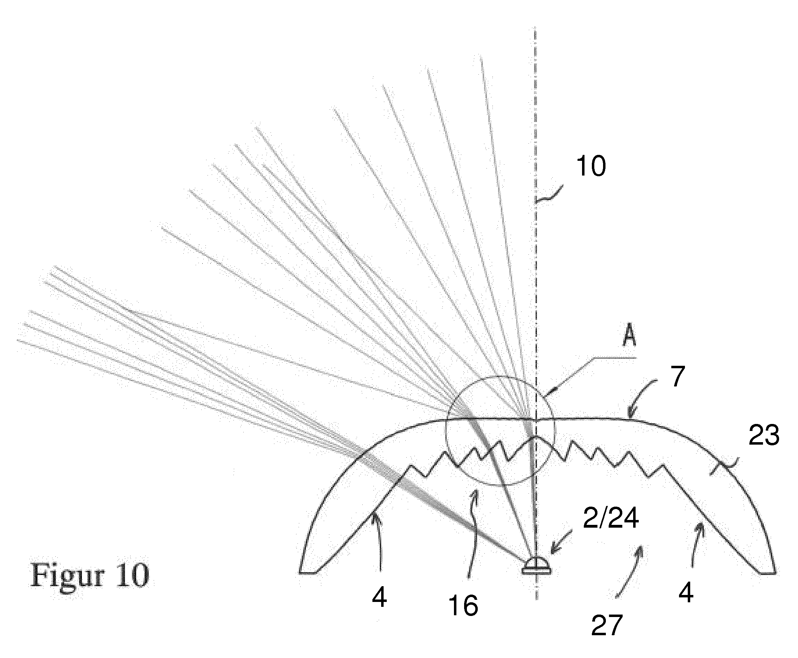

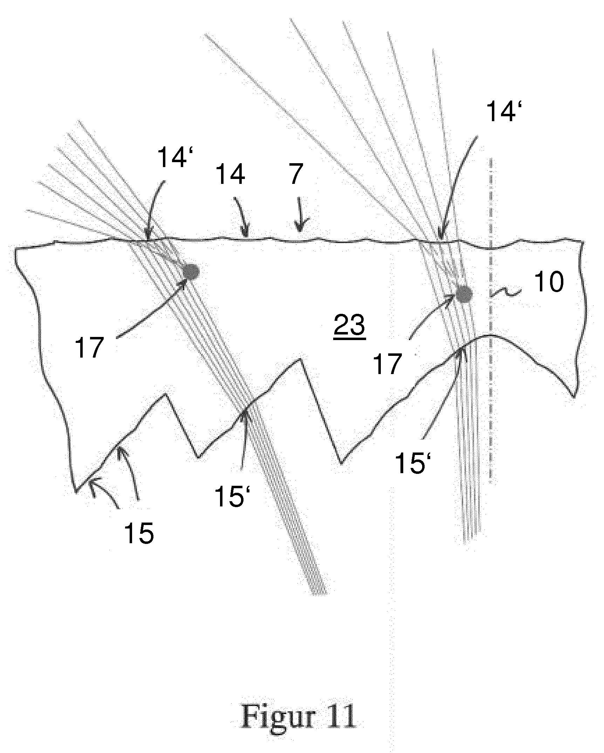

Ein Vergleich der Lichtverteilungen nach den Figuren 8 und 9 einerseits und den Figuren 10 und 11 andererseits macht den Einfluss der Facettierung der Lichteintrittsfläche 5 und der Lichtaustrittsfläche 6 auf die Lichtverteilung und die Homogenität der Ausleuchtung deutlich.

Während ein Basislinsenkörper 23' nach den Figuren 8 und 9 unsegmentiert beziehungsweise ohne Facettierung ausgeführt ist, weist der Optikkörper 23 nach den Figuren 10 und 11 die gleiche geometrische Grundstruktur wie der Basislinsenkörper 23' sowie zusätzlich die erfindungswesentliche Facettierung auf. Es wird deutlich, dass durch die Facettierung die Streuung des Lichts verbessert und die Homogenität der Ausleuchtung gesteigert werden. Die Facettierung kann insbesondere so vorgesehen sein, dass auf eine spezielle Teilfläche 15' der Lichteintrittsfläche 5 treffendes Licht auf eine hierzu korrespondierend angeordnete Teilfläche 14' der Lichtaustrittsfläche 6 trifft.

Nach einer alternativen, nicht dargestellten Ausführungsform der Erfindung kann die Facettierung an der Lichteintrittsfläche 5 und an der Lichteintrittsfläche 6 so ausgeführt sein, dass über die Teilfläche 15' der Lichteintrittsfläche 5 in den Optikkörper 23 eingekoppeltes Licht so gestreut wird, dass es auf verschiedene Teilflächen 14 der Lichtaustrittsfläche 6 trifft und über diese ausgekoppelt wird. Die Teilflächen 15 an der Lichteintrittsfläche 5 müssen daher nicht zwingend korrespondierend zu den Teilflächen 14 an der Lichtaustrittsfläche 6 vorgesehen werden. Insbesondere können sich die Anzahl an Teilflächen 14 an der Lichtaustrittsfläche 6 und die Anzahl der Teilflächen 15 an der Lichteintrittsfläche unterscheiden.

Figur 11 macht auch deutlich, wie für einen von außen auf die Lichtaustrittsfläche 6 schauenden Betrachter eine Vielzahl nicht realer, virtueller Lichtquellen 17 erscheinen. Die an einer Teilfläche 14 der Lichtaustrittsfläche 6 gestreuten Lichtstrahlen definieren in ihrem Fokus die virtuelle Lichtquelle 17. Diese virtuelle Lichtquelle 17 liegt abhängig von der geometrischen Gestaltung der Teilflächen 14 zwischen der Lichteintrittsfläche 5 und der Lichtaustrittsfläche 6 in dem Optikkörper 23. Die virtuellen Lichtquellen 17 sind unregelmäßig angeordnet. Sie weisen einen unterschiedlichen seitlichen Abstand und einen unterschiedlichen Abstand zu der Lichtaustrittsfläche 6 auf.

Beispielsweise können bei geeigneter Gestaltung der Teilflächen 14 beziehungsweise 15 weitere virtuelle Lichtquellen außerhalb der Vorsatzoptik 3, insbesondere zwischen der Lichtaustrittsfläche 6 und der Hinterleuchtungsfläche 1, liegen. Jeweils definiert ein Fokuspunkt der Teilflächen 14, 15 die Lage der virtuellen Lichtquellen 17 beziehungsweise der weiteren virtuellen Lichtquellen.

Die Wölbung der Teilflächen 14, 15 auf der Lichteintrittsfläche 5 und der Lichtaustrittsfläche 6 sind von der Lotrichtung 10 mit steigendem Winkel. Durch die Halbwertsbreite von etwa +/- 70° bezogen auf die Lotrichtung 10 einerseits und die Streuwirkung der Teilflächen 14, 15 an der Lichteintrittsfläche 5 und der Lichtaustrittsfläche 6 ergibt sich eine ausreichend hohe Lichtstärke auch in dem Winkelbereich von +/- 50° bis +/- 70° bezogen auf die Lotrichtung 10. Dies wird erreicht, indem die Wölbung der Teilflächen 14, 15 und damit die Streuung der äußeren Prismen kleiner gewählt ist als im Zentrum. Der ähnlichste Radius der Flächenformung verläuft dabei von zirka 1,5 mm im Zentrum auf zirka 60 mm im äußeren Randbereich. Hinzu kommt die gute Homogenität der Lichtverteilung, die insbesondere durch die vielen virtuellen Lichtquellen begünstigt wird. Die real ausgeführte Leuchtdiode 2 wird von dem außen stehenden Betrachter nicht oder nur in geringem Maße wahrgenommen.

Die Lichtstärkeverteilungskurven nach den Figuren 12 und 13 verdeutlichen die starke Umlenkung des Lichts in die Winkelbereiche zwischen 50° und 80° bezogen auf die Lotrichtung 10. Insbesondere ist zu erkennen, dass die Lichtumlenkung in Bezug auf die zweite Symmetrieachse 19 stärker ausgebildet ist als die Lichtumlenkung in Bezug auf die erste Symmetrieachse 18. Der Graph 21 der Lichtstärkeverteilungskurve ist hierbei bezogen auf die erste Symmetrieachse 18 und der Graph 22 der Lichtstärkeverteilungskurve auf die zweite Symmetrieachse 19.

Insbesondere in den Prinzipskizzen nach den Figuren 1 und 2 sind die Größenverhältnisse nicht maßstäblich dargestellt. Die Leuchtdiode 2 hat typischerweise eine Chipgröße von zirka 1 mm² bis 2 mm² und unter Umständen noch einen Silikondom mit einer Fläche von etwa 7 mm². Demgegenüber besitzt die Lichtaustrittsfläche 6 der Vorsatzoptik 3 eine Fläche von etwa 2.000 mm². Aus dem Größenverhältnis ergibt sich eine signifikante Reduzierung der maximal auftretenden Leuchtdichte.

Zur Verwendung mit der Vorsatzoptik 3 werden insbesondere Hochleistungsleuchtdioden 2 mit 1 W bis 3 W Leistung beziehungsweise 100 lm bis 300 lm verwendet.

**Bezugszeichenliste**

| | | | |
|---|---|---|---|
| 1 | Hinterleuchtungsfläche | 21 | Lichtstärkeverteilungskurve |
| 2 | Lichtquelle | 22 | Lichtstärkeverteilungskurve |
| 3 | Vorsatzoptik | 23 | Optikkörper |
| 4 | Innenseite | 23' | Basislinsenkörper |
| 5 | Lichteintrittsfläche | 24 | optisches Zentrum |
| 6 | Lichtaustrittsfläche | 25 | Lichtmodul |
| 7 | Außenseite | 26 | Installationsebene |
| 8 | seitlicher Abstand | 27 | Ausnehmung |
| 9 | Abstand | 28 | Grenzkurve |
| 10 | Lotrichtung | 29 | Ringstufen |
| 11 | Erstreckungsebene | | |
| 12 | Hauptabstrahlrichtung | | |
| 13 | Teilfläche | | |
| 14 | Teilfläche | | |
| 14' | Teilfläche | | |
| 15 | Teilfläche | | |
| 15' | Teilfläche | | |
| 16 | mittlerer Bereich | | |
| 17 | virtuelle Lichtquelle | | |
| 18 | erste Symmetrieachse | | |
| 19 | zweite Symmetrieachse | | |
| 20 | Schnittpunkt | | |

## Patentansprüche

1. Lichtmodul (25) umfassend eine Vorsatzoptik (3) mit einem Optikkörper (23) und mit einem für die Aufnahme der Lichtquelle (2) ausgebildeten optischen Zentrum (24), welches außerhalb des Optikkörpers (23) und beabstandet zu demselben vorgesehen ist, wobei der Optikkörper (23) schalenartig gebildet ist mit einer dem optischen Zentrum (24) zugewandten Innenseite (4), welche eine facettierte Lichteintrittsfläche (5) trägt, und mit einer eine facettierte Lichtaustrittsfläche (6) aufweisenden Außenseite (7) und umfassend eine in dem optischen Zentrum (24) der Vorsatzoptik (3) derart angeordnete Lichtquelle (2), dass an der Lichteintrittsfläche (5) des Optikkörpers (23) von der Lichtquelle (2) abgestrahltes Licht in den Optikkörper (23) eingekoppelt wird, wobei das in den Optikkörper (23) eingekoppeltes Licht über die Lichtaustrittsfläche (6) auskoppelbar ist, **dadurch gekennzeichnet, dass** die Lichteintrittsfläche (5) und/oder die Lichtaustrittsfläche (6) derart facettiert ausgebildet sind und zusammenwirken, dass sich für einen von außen auf die Lichtaustrittsfläche (6) schauenden Betrachter eine Vielzahl von virtuellen Lichtquellen (17) darstellt, welche unregelmäßig angeordnet zwischen der Lichteintrittsfläche (5) und der Lichtaustrittsfläche (6) liegen.

2. Lichtmodul (25) nach Anspruch 1, **dadurch gekennzeichnet, dass** weitere virtuelle Lichtquellen außerhalb des Optikkörper (23) der Vorsatzoptik (3) gebildet sind.

3. Lichtmodul (25) nach Anspruch 1 oder 2, **dadurch gekennzeichnet, dass**
- an der facettierten Lichteintrittsfläche (5) und/oder an der facettierten Lichtaustrittsfläche (6) eine Vielzahl von optisch wirksamen Teilflächen (14, 15) vorgesehen ist, wobei die Teilflächen (14, 15) nach Art von Freiformflächen gebildet sind, und/oder
- die facettierte Lichteintrittsfläche (5) und/oder die facettierte Lichtaustrittsfläche (6) eine Kissenstruktur aufweisen, wobei die Teilflächen (14, 15) der kissenartig strukturierten Lichteintrittsfläche (5) und/oder Lichtaustrittsfläche (6) durch vier gekrümmte Grenzkurven (28) definiert ist, und/oder
- die Teilflächen (15) der facettierten Lichteintrittsfläche (5) und/oder die Teilflächen (14) der facettierten Lichtaustrittsfläche (6) konkav gekrümmt ausgebildet sind, und/oder
- in Bezug auf eine Aufsicht auf den Optikkörper an demselben zwei sich schneidende Symmetrieachsen (18, 19) gebildet sind und/oder eine Punktsymmetrie vorgesehen ist in Bezug auf einen Schnittpunkt (20) einer ersten Symmetrieachse (18) und einer zweiten Symmetrieachse (19) und/oder zwischen der ersten Symmetrieachse (18) und der zweiten Symmetrieachse (19) ein Winkel von 45° vorgesehen ist, und/oder
- die Lichteintrittsfläche (5) in einem mittleren Bereich (16) ringförmig gestuft und/oder nach Art einer Fresnel-Linse ausgebildet ist.

4. Lichtmodul (25) nach einem der Ansprüche 1 bis 3, **dadurch gekennzeichnet, dass** die virtuelle Lichtquellen (17) und/oder die weiteren virtuellen Lichtquellen jeweils in einem Fokuspunkt der Teilflächen (14) der facettierten Lichtaustrittsfläche (6) und/oder ein einem Fokuspunkt der Teilflächen (15) der facettierten Lichteintrittsflächen (5) gebildet sind.

5. Lichtmodul (25) nach einem der Ansprüche 1 bis 4, **dadurch gekennzeichnet, dass** die als Freiformflächen ausgebildeten Teilflächen (15) an der facettierten Lichteintrittsfläche (5) mit den als Freiformflächen ausgebildeten Teilflächen (14) an der facettierten Lichtaustrittsfläche (6) derart zusammenwirken, dass eine Lichtverteilung von mehr als +/- 65° bezogen eine die Lotrichtung (10) der Lichtquelle (2) bereitgestellt wird.

6. Lichtmodul (25) nach einem der Ansprüche 1 bis 5, **dadurch gekennzeichnet, dass** die als Freiformflächen ausgebildeten Teilflächen (15) an der facettierten Lichteintrittsfläche (5) mit den als Freiformflächen ausgebildeten Teilflächen (14) an der facettierten Lichtaustrittsfläche (6) derart zusammenwirken, dass eine Halbwertsbreite für eine von dem Lichtmodul (25) bereitgestellte Lichtverteilung von mehr als 140° gebildet ist

7. Lichtmodul (25) nach einem der Ansprüche 1 bis 6, **dadurch gekennzeichnet, dass** ein Abstrahlwinkel des über die Lichtaustrittsfläche (6) abgestrahlten Lichts in Bezug auf die zweite Symmetrieachse (19) um wenigstens 1°, bevorzugt um 2° +/- 0,5° und besonders bevorzugt um 2° +/- 0,2° größer ist als ein Abstrahlwinkel des Lichts in Bezug auf die erste Symmetrieachse (18).

8. Beleuchtungsvorrichtung mit einem Lichtmodul (25) nach einem der Ansprüche 1 bis 7 und mit einer Hinterleuchtungsfläche (1), welche beabstandet zu der an der Vorsatzoptik (3) des Lichtmoduls (25) vorgesehenen Lichtaustrittsfläche (6) auf einer der Leuchtdiode (2) abgewandten Seite des Optikkörper (23) angeordnet ist, wobei die Hinterleuchtungsfläche (1) im Wesentlichen eben ausgebildet ist und/oder sich senkrecht zu der eine Hauptabstrahlrichtung (12) des Lichtmoduls (25) definierten Lotrichtung (10) desselben erstreckt und/oder wobei die Hinterleuchtungsfläche (1) im Wesentlichen rechteckig gebildet und/oder homogen ausgeleuchtet ist.

9. Beleuchtungsvorrichtung nach Anspruch 8, **dadurch gekennzeichnet, dass** der Hinterleuchtungsfläche (1) eine Mehrzahl von in einer gemeinsamen Installationsebene (26) beabstandet angeordneten Lichtmodulen (25) zugeordnet ist, wobei die Installationsebene (26) und eine Erstreckungsebene (11) der Hinterleuchtungsfläche (1) zueinander parallel vorgesehen sind, und dass ein in der Installationsebene (26) bestimmter seitlicher Abstand (8) der optischen Zentren (24) benachbarter Vorsatzoptiken (3) wenigstens dreimal und bevorzugt wenigstens viermal so groß ist wie ein in die Lotrichtung (10) der Lichtquelle (2) bestimmter Abstand (9) zwischen den optischen Zentren (24) der Vorsatzoptiken (3) und der Hinterleuchtungsfläche (1).

## Claims

1. Light module (25) consisting of an ancillary lens (3) with a lens body (23) and an optical center (24) designed for the light source (2) holder, which is positioned outside of the lens body (23) at a distance to the same. The lens body (23) has a shell-type design and the interior (4) faces the optical center (24). This lens includes a faceted light entry surface (5) and an exterior (7) that features a faceted light exit surface (6) and, surrounding this, a light source (2) arranged in the optical center (24) of the ancillary lens (3) such that light emitted from the light source (2) is fed into the lens body (23), at which point this light fed into the lens body (23) can be uncoupled via the light exit surface (6). This is **characterized by** the fact that the light entry surface (5) and/or light exit surface (6) have faceted designs and interact such that outside observers of the light exit surface (6) see a plurality of virtual light sources (17), which are unevenly arranged between the light entry surface (5) and light exit surface (6).

2. Light module (25) in accordance with Claim 1, **characterized by** additional light sources that have been generated outside the lens body (23) of the ancillary lens (3).

3. Light module (25) in accordance with Claim 1 or 2, **characterized by** the following features:
• A plurality of optically active subareas (14, 15), which have designs similar to free-form surfaces, are provided on the faceted light entry surface (5) and/or faceted light exit surface (6)
• The faceted light entry surface (5) and/or faceted light exit surface (6) exhibit a cushion structure where the subareas (14,15) of the cushion-like light entry surface (5) and/or light exit surface (6) are defined by four bent limit curves, and/or
• The subareas (15) of the faceted light entry surface (5) and/or subareas (14) of the faceted light exit surface (6) are concave, and/or
• Related to a top view of the lens body on which two overlapping symmetry axes (18, 19) have formed and/or a point symmetry is provided for an intersection point (20) of a first symmetry axis (18) and a second symmetry axis (19) and/or a 45 degree angle is provided between the first symmetry axis (18) and the second symmetry axis (19), and/or
• A center area (16) of the light entry surface (5) has ring-shaped tiers and/or a design similar to a Fresnel lens

4. Light module (25) in accordance with one of the claims 1 through 3, **characterized by** the virtual light sources (17) and/or additional virtual light sources that have formed in a focal point of the subareas (14) of the faceted light exit surface (6) and/or in a focal point of the subareas (15) of the faceted light entry surfaces (5) respectively.

5. Light module (25) in accordance with one of the claims 1 through 4, **characterized by** subareas (15) designed as free-form surfaces on the faceted light entry surface (5) interacting with the subareas (14) designed as free-form surfaces on the faceted light exit surface (6) such that a light distribution is created that is +/- 65 degrees relative to a light distribution in the vertical direction (10) of the light source (2).

6. Light module (25) in accordance with one of the claims 1 through 5, **characterized by** subareas (15) designed as free-form surfaces on the faceted light entry surface (5) interacting with the subareas (14) designed as free-form surfaces on the faceted light exit surface (6) such that a half-width value of more than 140 degrees is created for a light distribution generated by the light module (25).

7. Light module (25) in accordance with one of the claims 1 through 6, **characterized by** a beam angle of light emitted via the light exit surface (6), relative to the second symmetry axis (19), that is at least 1 degree, but preferably 2 +/- 0.5 degrees, and ideally 2 degrees +/- 0.2 degrees greater than a beam angle of the light relative to the first symmetry axis (18).

8. Illumination device with a light module (25) in accordance with one of the claims 1 through 7 and with a backlit surface (1), which is arranged on a side of the lens body (23) facing away from the LED (2) and placed at a distance from the light exit surface (6) of the light module's (25) ancillary lens (3). The backlit surface (1) has a mostly even design and/or extends in a vertical direction (10) of the light module (25) defined by the main beam direction (12) of this module and/or the backlit surface (1) has a mostly rectangular design and/or is homogenously illuminated.

9. Illumination device in accordance with Claim 8, **characterized by** fact that the backlit surface (1) is assigned a multitude of light modules (25) that are evenly arranged in one common installation level (26), where the installation level (26) and an extension level (11) are parallel to one another and a lateral distance of the ancillary lenses (3) adjacent to the optical centers (24) specified in the installation level (26) is at least three times, but preferably at least four times as large as a specified distance (9) between the optical centers (24), ancillary lenses (3) and backlit surface (1) in the vertical direction (10) of the light source (2).

## Revendications

1. Module lumineux (25) comprenant une optique auxiliaire (3) avec un corps optique (23) et avec un centre optique (24) réalisé à recevoir la source lumineuse (2), le centre optique étant prévu à l'extérieur du corps optique (23) et distant de celui-ci, le corps optique (23) étant en forme de cuvette avec un côté intérieur (4) orienté vers le centre optique (24) qui porte une surface d'entrée de lumière à facettes (5), et avec un côté extérieur (7) présentant une surface de sortie de lumière à facettes (6) et comprenant une source lumineuse (2) disposée de telle manière au centre optique (24) de l'optique auxiliaire (3) que sur la surface d'entrée de lumière (5) du corps optique (23) la lumière émise par la source lumineuse (2) soit couplée dans le corps optique (23), la lumière couplée dans le corps optique (23) pouvant être découplée par la surface de sortie de lumière (6),
**caractérisé en ce que**
la surface d'entrée de lumière (5) et/ou la surface de sortie de lumière (6) sont réalisées à facettes et interagissent de telle manière qu'elles présentent pour un observateur regardant de l'extérieur sur la surface de sortie de lumière (6) une multitude de sources lumineuses virtuelles (17) qui sont disposées de manière irrégulière entre la surface d'entrée de lumière (5) et la surface de sortie de lumière (6).

2. Module lumineux (25) selon la revendication 1, **caractérisé en ce que** d'autres sources lumineuses virtuelles sont constituées en dehors du corps optique (23) de l'optique auxiliaire (3).

3. Module lumineux (25) selon la revendication 1 ou 2, **caractérisé en ce que**
- sur la surface d'entrée de lumière à facettes (5) et/ou sur la surface de sortie de lumière à facettes (6) une multitude de surfaces partielles à effet optique (14, 15) est prévue, les surfaces partielles (14, 15) étant réalisées à la manière des surfaces libres et/ou
- la surface d'entrée de lumière à facettes (5) et/ou la surface de sortie de lumière à facettes (6) présentent une structure de coussins, les surfaces partielles (14, 15) de la surface d'entrée de lumière à structure de coussins (5) et/ou la surface de sortie de lumière à structure de coussins (6) étant définies par quatre courbes limite courbées (28) et/ou
- les surfaces partielles (15) de la surface d'entrée de lumière à facettes (5) et/ou les surfaces partielles (14) de la surface de sortie de lumière à facettes (6) sont courbées de manière concave et/ou
- quant à une vue de dessus sur le corps optique sur lequel se croisent deux axes symétriques (18, 19) et/ou une symétrie par rapport à un point est prévue, quant à une intersection (20) d'un premier axe de symétrie (18) et d'un deuxième axe de symétrie (19) et/ou un angle de 45° est prévu entre le premier axe de symétrie (18) et le deuxième axe de symétrie (19) et/ou
- la surface d'entrée de lumière (5) dans une zone moyenne (16) est échelonnée de manière annulaire et/ou réalisée à la manière d'une lentille Fresnel.

4. Module lumineux (25) selon l'une des revendications 1 à 3, **caractérisé en ce que** les sources lumineuses virtuelles (17) et/ou les autres sources lumineuses virtuelles sont formées chaque fois dans un point focal des surfaces partielles (14) de la surface de sortie de lumière à facettes (6) et/ou dans un point focal des surfaces partielles (15) de la surface d'entrée de lumière à facettes (5).

5. Module lumineux (25) selon l'une des revendications 1 à 4, **caractérisé en ce que** les surfaces partielles (15) réalisées sous forme de surfaces libres sur la surface d'entrée de lumière à facettes (5) interagissent de telle sorte avec les surfaces partielles (14) réalisées sous forme de surfaces libres sur la surface de sortie de lumière à facettes (6) qu'une répartition lumineuse de plus de +/- 65° par rapport à la direction de la verticale (10) de la source lumineuse (2) soit disponible.

6. Module lumineux (25) selon l'une des revendications 1 à 5, **caractérisé en ce que** les surfaces partielles (15) réalisées sous forme de surfaces libres sur la surface d'entrée de lumière à facettes (5) interagissent de telle sorte avec les surfaces partielles (14) réalisées sous forme de surfaces libres sur la surface de sortie de lumière à facettes (6) qu'une largeur à mi-hauteur soit formée pour une répartition lumineuse de plus de 140° mise à disposition par le module lumineux (25).

7. Module lumineux (25) selon l'une des revendications 1 à 6, **caractérisé en ce qu'**un angle de départ de la lumière émise sur la surface de sortie de lumière (6) par rapport au deuxième axe de symétrie (19) est plus grand d'au moins 1°, de préférence de 2° +/-0,5° et plus préféré de 2° +/- 0,2° qu'un angle de départ de la lumière par rapport au premier axe de symétrie (18).

8. Dispositif d'éclairage avec un module lumineux (25) selon l'une des revendications 1 à 7 et avec une surface rétro-éclairée (1) qui est disposée à distance de la surface de sortie de lumière (6) prévue à l'optique auxiliaire (3) du module lumineux (25) sur un côté du corps optique (23) opposé à la diode électroluminescente (2), la surface rétro-éclairée (1) étant essentiellement plane et/ou s'étendant perpendiculairement à une direction de la verticale (10) du module définie comme une direction principale du rayonnement (12) du module lumineux (25) et/ou la surface rétro-éclairée (1) étant essentiellement rectangulaire et/ou éclairée de manière homogène.

9. Dispositif d'éclairage selon la revendication 8, **caractérisé en ce qu'**une majorité de modules lumineux (25) montée distants l'un de l'autre dans un plan d'installation commun (26) est attribuée à la surface rétro-éclairée (1), le plan d'installation commun (26) et un plan d'extension (11) de la surface rétro-éclairée (1) étant prévus parallèlement l'un par rapport à l'autre et qu'au plan d'installation (26) une distance latérale définie (8) des centres optiques (24) des optiques auxiliaires (3) voisines est au moins trois fois et, de préférence au moins quatre fois celle de la distance (9) définie en direction de la verticale (10) de la source lumineuse (2) entre les centres optiques (24) des optiques auxiliaires (3) et de la surface rétro-éclairée (1).
